# EUROPÄISCHE PATENTSCHRIFT

(11) **EP 2 089 450 B1**
(45) Veröffentlichungstag und Bekanntmachung des Hinweises auf die Patenterteilung: **20.06.2018**
(21) Anmeldenummer: 07820585.3
(22) Anmeldetag: 26.09.2007
(51) Int. Cl.: C08G 18/42, C09J 175/06, B32B 7/12, C08G 18/76

(54) **POLYURETHAN-KASCHIERKLEBSTOFF**
POLYURETHANE LAMINATION ADHESIVE
ADHÉSIF EN POLYURÉTHANNE POUR STRATIFICATION

(30) Priorität: 14.12.2006 DE 102006059464
(43) Veröffentlichungstag der Anmeldung: 19.08.2009
(73) Patentinhaber: Henkel AG & Co. KGaA, 40589 Düsseldorf (DE)
(72) Erfinder: KOLLBACH, Guido, Apex, NC 27502 (US); SAUER, Rene, 40227 Düsseldorf (DE)
(86) Internationale Anmeldenummer: PCT/EP2007/060190
(87) Internationale Veröffentlichungsnummer: WO 2008/071470

(56) Entgegenhaltungen:
- EP-A- 0 485 008
- WO-A-2007/047513
- DE-A1- 3 529 176

## Beschreibung

Die Erfindung betrifft einen NCO-reaktiven Polyurethan-Klebstoff, der zum Verkleben von Folien geeignet ist. Die verklebten Mehrschichtfolien weisen bei Lagerung und nach Weiterverarbeitung einen verminderten Anteil von primären aromatischen Aminen auf.

Kaschierklebstoffe sind in der Industrie allgemein bekannt. Es handelt sich dabei um lösemittelhaltige oder lösemittelfreie, vernetzende oder physikalisch abbindende Klebstoffe, die dazu dienen dünne, flächige Substrate, wie beispielsweise Kunststofffolien, Metallfolien, Papier oder Kartonagen, miteinander zu verkleben. Dabei ist es wesentlich, dass durch die Verklebung die Flexibilität der dünnen einzelnen Lagen nur wenig vermindert wird. Durch die Auswahl der einzelnen Folienlagen ist es möglich, bestimmte Eigenschaften dieser Mehrschichtfolien zu beeinflussen, insbesondere Durchlässigkeit für Wasser, andere Flüssigkeiten, Chemikalienbeständigkeit, Durchlässigkeit für Sauerstoff oder andere Gase.

Weiter ist es bekannt, dass aus solchen Mehrschichtfolien Verpackungen gefertigt werden. In solchen Verpackungen können beispielsweise Lebensmittel in fester, pastöser oder flüssiger Form verpackt werden. Weiterhin können auch Gegenstände des täglichen Bedarfs, beispielsweise Kunststoffbestecke, verpackt werden. Weiterhin sind solche Verpackungen geeignet, auch medizinische Materialien oder Gegenstände aufzunehmen.

Aus den oben genannten Anwendungsgebieten ergibt sich, dass möglichst keine niedermolekularen Stoffe aus den Verpackungen in das verpackte Gut migrieren dürfen. Es kann sich dabei um aromaschädliche Stoffe handeln oder die entsprechende Stoffe haben bei Inkorporation eine die Gesundheit beeinträchtigende Wirkung. Bei solchen Stoffen kann es sich im Falle von mit Polyurethanen verklebten Folien insbesondere um Abbauprodukte der eingesetzten Isocyanatvorprodukte, beispielsweise der hydrolysierten Polyisocyanate, handeln. Aus solchen Polyisocyanatvorprodukten können dabei primäre Amine, insbesondere primäre aromatische Amine entstehen. Von diesen ist es bekannt, dass sie die Gesundheit beeinträchtigen. Deswegen gibt es verschiedene Normen, die einen Maximalgehalt von solchen primären aromatischen Aminen in zur Verpackung geeigneten Folien festlegen.
Bei den Polyurethan-Klebstoffen ist es üblich dass bei der Synthese niedermolekulare Isocyanate eingesetzt werden. Dabei lässt es sich aus chemischen Gründen nicht vermeiden, dass auch geringe Anteile von monomeren Isocyanaten im Klebstoff enthalten sind. Eine weitere Gruppe von PU-Klebstoffen setzt dem Klebstoff zur Verbesserung von bestimmten Eigenschaften oligomere Isocyanate zu. Diese sollen mit Vernetzern, beispielsweise Polyolen, oder mit Wasser reagieren, um so ein vernetzten Klebstoff zu ergeben. Dabei bleiben auch in diesem Falle Anteile an oligomeren Isocyanaten nach der Verklebung im Klebstoff enthalten. Unter Einwirkung von Feuchtigkeit bei einer längeren Lagerung solcher Gegenstände ist es bekannt, dass solche Isocyanat-Gruppen reagieren und, da nur geringe Anteile von Isocyanat-Gruppen vorliegen, diese dann zu Aminogruppen abreagieren. Solche primären Amine können dann mit der Zeit in die Umgebung migrieren. Das ist insbesondere bei niedermolekularen Hydrolyseprodukten der Fall.
Werden hochmolekulare Polyisocyanat-Präpolymere eingesetzt, ist es jedoch bei dem häufig notwendigen Sterilisieren der Folien möglich, dass bei dem Prozess aus den sich bei der Vernetzung gebildeten Urethan- oder Harnstoffgruppen durch hydrolytische Rückspaltung Aminogruppen bilden. Insbesondere bei einer Sterilisation unter Feuchtigkeitseinfluss und bei erhöhter Temperatur sind solche hydrolytischen Vorgänge bekannt. Auch dabei ergeben sich dann auch primäre aromatische Amine, die in den Werkstoff migrieren können.

Besonders im Verpackungsbereich, speziell bei Lebensmittelverpackungen, sind solche Migrate unerwünscht. Zur Vermeidung der oben geschilderten Nachteile schlägt die EP-A 0 118 065 vor, Polyurethan-Präpolymere in einem zweistufigen Verfahren herzustellen. Hierbei wird zunächst in einer ersten Stufe ein monocyclisches Diisocyanat mit einem polyfunktionellen Alkohol umgesetzt und anschließend in einem zweiten Schritt ein Diisocyanat mit polyfunktionellen Alkoholen mit einem Überschuss von Isocyanat in Anwesenheit des im ersten Schritt hergestellten Präpolymeren zur Reaktion gebracht. Das so hergestellte Gemisch weist einen verminderten Anteil an monomeren Isocyanaten auf.

Die DE-A 34 01 129 betrifft ein Verfahren zur Herstellung von Polyurethan-Präpolymere, bei dem mehrfunktionelle Alkohole zunächst mit der schneller reagierenden Isocyanatgruppe eines asymmetrischen Diisocyanats unter Erhalt der langsamer reagierenden Gruppe umgesetzt werden, die Umsetzungsprodukte dann mit einem symmetrischen Diisocyanat verbunden werden, dessen Isocyanatgruppen schneller reagieren als die langsam reagierenden Gruppen der erstgenannten mehrfunktionellen Isocyanatverbindung. Die beschriebenen Polyurethan-Präpolymeren weisen ebenso einen verminderten Anteil an monomeren aromatischen Isocyanaten auf.

Die EP-A 0 019 120 betrifft ein Verfahren zur Herstellung elastischer, wetterbeständiger Flächengebilde. Hierzu wird ein zweistufiges Verfahren vorgeschlagen, bei dem in einer ersten Stufe Toluylendiisocyanat (TDI) mit mindestens äquimolaren Mengen eines Polyols zur Reaktion gebracht und das erhaltene Reaktionsprodukt anschließend mit Diphenylmethan-diisocyanat (MDI) und einem Polyol umgesetzt wird. Die so erhältlichen Polyurethanbindemittel sind als Klebstoff in der Lage, mit Wasser oder mit Luftfeuchtigkeit auszuhärten. Das beschriebene Verfahren führt zwar zu Produkten mit einer relativ niedrigen Viskosität, ein Gehalt an freiem, leichtflüchtigem Diisocyanat ist jedoch immer noch vorhanden und lässt sich nur verringern, wenn zeit- und energieaufwendige Methoden zur Entfernung von überschüssigem, leichtflüchtigem Diisocyanat, beispielsweise eine Dünnschichtdestillation, angewandt werden.

Die vorliegende Erfindung hat sich deshalb die Aufgabe gesetzt, Polyurethan-Klebstoffe zur Verfügung zu stellen, die nach dem Vernetzen einen Klebstoff ergeben, der bei längerer Lagerung oder bei Sterilisation einen verminderten Anteil von primären Aminen insbesondere primären aromatischen Aminen aufweist.

Die Aufgabe wird dadurch gelöst, dass ein Polyurethan-Klebstoff zum Kaschieren von Folien zur Verfügung gestellt wird, wobei der PU-Klebstoff mindestens ein NCO-reaktives Polyurethanprepolymer und/oder Polyisocyanate enthält, wobei der PU-Klebstoff bei Raumtemperatur flüssig ist, wobei der PU-Klebstoff zwischen 0,5 bis 20 Gew.-% einer niedermolekularen Verbindungen (A) enthält, die mindestens eine mit primären Aminogruppen reaktive Gruppe enthält, ausgewählt aus Epoxidgruppen oderoligomeren Polyestern von ungesättigten Carbonsäure.

Weiterhin betrifft die Erfindung ein Verfahren zur Herstellung von Mehrschichtfolien bereitzustellen, die nur einen verminderten Anteil von migrationsfähigen primären aromatischen Aminen enthalten. Weiterhin betrifft die Erfindung die Verwendung solcher Polyurethan-Klebstoffen als Kaschierklebstoff.

Polyurethan-Klebstoffe sind allgemein bekannt. Diese werden auch zum Kaschieren von Mehrschichtfolien eingesetzt. Bei den erfindungsgemäß geeigneten Klebstoffen handelt es sich um 1K-Polyurethan-Klebstoffe oder 2K-Polyurethan-Klebstoffe. Die Klebstoffe sind bei Raumtemperatur flüssig. Die Klebstoffe können Lösemittel enthalten, bevorzugt sind sie jedoch frei von Lösemitteln. Die Vernetzung der erfindungsgemäßen geeigneten Polyurethan-Klebstoffe beruht auf der Umsetzung von reaktiven NCO-Gruppen, insbesondere aromatischen NCO-Gruppen, mit H-aciden funktionellen Gruppen, beispielsweise OH-Gruppen, Aminogruppen oder Carboxylgruppen. Eine alternative Vernetzungsmethode besteht darin, dass die NCO-Gruppen mit Feuchtigkeit aus dem aufgetragenen Klebstoff, dem Substrat, oder der Umgebung reagieren unter Bildung von Harnstoffgruppen. Diese Vernetzungsreaktionen sind bekannt, sie können auch nebeneinander ablaufen. Zur
Beschleunigung solcher Reaktionen sind üblicherweise Katalysatoren im Klebstoff vorhanden, beispielsweise Amin- oder Zinnkatalysatoren.

Es könne die bekannten Lack- oder Klebstoff-Polyisocyanate eingesetzt werden, wobei es sich um Polyisocyanate mit zwei oder mehr Isocyanat-Gruppen handelt. Geeignete Polyisocyanate sind beispielsweise 1,5-Naphthylendiisocyanat (NDI), 2,4- oder 4,4'-Diphenylmethandiisocyanat (MDI), hydriertes MDI (H12MDI), Xylylendiisocyanat (XDI), Tetramethylxylylendiisocyanat (TMXDI), Di- und Tetraalkylendiphenylmethandiisocyanat, 4,4'-Dibenzyldiisocyanat, 1,3- oder 1,4-Phenylendiisocyanat, Toluylendiisocyanats (TDI), 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI), Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylen-diisocyanat, Methylentriphenyltriisocyanat (MIT), Phthalsäure-bis-isocyanato-ethylester, Trimethylhexamethylendiisocyanat, 1,4-Diisocyanatobutan, 1,12-Diisocyanatododecan und Dimerfettsäurediisocyanat.

Als mindestens trifunktionelle Isocyanate geeignet sind Polyisocyanate, die durch Trimerisation oder Oligomerisation von Diisocyanaten oder durch Reaktion von Diisocyanaten mit niedermolekulerenpolyfunktionellen hydroxyl- oder aminogruppenhaltigen Verbindungen entstehen. Kommerzielle erhältliche Beispiele sind Trimerisierungsprodukte der Isocyanate HDI, MDI oder IPDI oder Addukte aus Diisocyanaten und niedermolekularen Triolen, wie Trimethylolpropan oder Glycerin.

Es können im Prinzip aliphatische, cycloaliphatische oder aromatische Isocyanate eingesetzt werden, insbesondere sind jedoch aromatische Isocyanate geeignet. Die erfindungsgemäßen PU-Klebstoffe können die Isocyanate umgesetzt als PU-Prepolymere enthalten oder sie enthalten zumindest anteilig niedermolekulare oligomere Isocyanate.

Erfindungsgemäß sollen die PU-Klebstoffe mindestens einen Polyol enthalten. Dabei kann es sich um einen einzelnen Polyol handeln oder bevorzugt in ein Gemisch von mehren Polyolen. Geeignete Polyole sind aliphatische und/oder aromatische Alkohole mit 2 bis 6, vorzugsweise 2 bis 4, OH-Gruppen pro Molekül. Die OH-Gruppen können sowohl primär als auch sekundär sein.

Zu den geeigneten aliphatischen Alkoholen zählen beispielsweise Ethylenglykol, Propylenglykol, Butandiol-1,4, Pentandiol-1,5, Hexandiol-1,6, Heptandiol-1,7, Octandiol-1,8 und deren höhere Homologen oder Isomeren. Ebenfalls geeignet sind höherfunktionelle Alkohole wie beispielsweise Glycerin, Trimethylolpropan, Pentaerythrit sowie oligomere Ether der genannten Substanzen.

Bevorzugt werden als Polyolkomponente Umsetzungsprodukte niedermolekularer polyfunktioneller Alkohole mit Alkylenoxiden, eingesetzt. Die Alkylenoxide weisen vorzugsweise 2 bis 4 C-Atome auf. Geeignet sind beispielsweise die Umsetzungsprodukte von Ethylenglykol, Propylenglykol, den isomeren Butandiolen, Hexandiolen oder 4,4'-Dihydroxy-diphenylpropan mit Ethylenoxid, Propylenoxid oder Butylenoxid, oder Gemischen aus zwei oder mehr davon. Ferner sind auch die Umsetzungsprodukte polyfunktioneller Alkohole, wie Glycerin, Trimethylolethan oder Trimethylolpropan, Pentaerythrit oder Zuckeralkohole, oder Gemischen aus zwei oder mehr davon, mit den genannten Alkylenoxiden zu Polyetherpolyolen geeignet. Weitere, im Rahmen der Erfindung gebräuchliche Polyole, entstehen durch Polymerisation von Tetrahydrofuran (Poly-THF).

Ebenfalls zum Einsatz als Polyolkomponente geeignet sind Polyether, die durch Vinylpolymere modifiziert wurden. Derartige Produkte sind beispielsweise erhältlich, indem Styrol- oder Acrylnitril, oder deren Gemisch, in der Gegenwart von Polyethern polymerisiert werden.

Weiter geeignete Polyole sind Polyesterpolyole. Beispiele dafür sind Polyesterpolyole, die durch Umsetzung von niedermolekularen Alkoholen, insbesondere von Ethylenglykol, Diethylenglykol, Neopentylglykol, Hexandiol, Butandiol, Propylenglykol, Glycerin oder Trimethylolpropan mit Caprolacton entstehen.

Weitere geeignete Polyesterpolyole sind durch Polykondensation herstellbar. Derartige Polyesterpolyole umfassen bevorzugt die Umsetzungsprodukte von polyfunktionellen, vorzugsweise difunktionellen Alkoholen und polyfunktionellen, vorzugsweise difunktionellen und/oder trifunktionellen Carbonsäuren oder Polycarbonsäureanhydride. Zur Herstellung derartiger Polyesterpolyole geeignet sind insbesondere Hexandiol, 1,4-Hydroxymethylcyclohexan, 2-Methyl-1,3-propandiol, Butantriol-1,2,4, Triethylenglykol, Tetraethylenglykol, Ethylenglykol, Polyethylenglykol, Dipropylenglykol, Polypropylenglykol, Dibutylenglykol und Polybutylenglykol. Es können auch Anteile an trifunktionellen Alkoholen zugesetzt werden.

Die Polycarbonsäuren können aliphatisch, cycloaliphatisch, aromatisch oder heterocyclisch oder beides sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Phthalsäure, Isophthalsäure, Terephthalsäure, Trimellithsäure, Phthalsäureanhydrid, Tetrahydrophthalsäureanhydrid, Hexahydrophthalsäureanhydrid, Glutarsäureanhydrid, Maleinsäure, Maleinsäureanhydrid, Fumarsäure, Dimerfettsäure oder Trimerfettsäure oder Gemische aus zwei oder mehr davon geeignet. Gegebenenfalls können auch Anteile an Tricarbonsäuren zugesetzt werden.

Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Weitere geeignete Polyole sind Polycarbonat-Polyole und Dimerdiole (Fa. Henkel) sowie Rizinusöl und dessen Derivate. Auch die Hydroxy-funktionellen Polybutadiene, wie sie z.B. unter dem Handelsnamen Poly-bd erhältlich sind, können für die erfindungsgemäßen Zusammensetzungen als Polyole eingesetzt werden.

Ebenfalls als Polyolkomponente geeignet sind Polyacetale. Unter Polyacetalen werden Verbindungen verstanden, wie sie aus Glykolen, beispielsweise Diethylenglykol oder Hexandiol oder deren Gemisch mit Formaldehyd erhältlich sind. Im Rahmen der Erfindung einsetzbare Polyacetale können ebenfalls durch die Polymerisation cyclischer Acetale erhalten werden. Weiterhin als Polyole geeignet sind Polycarbonate. Polycarbonate können beispielsweise durch die Reaktion von Diolen, wie Propylenglykol, Butandiol-1,4 oder Hexandiol-1,6, Diethylenglykol, Triethylenglykol oder Tetraethylenglykol oder Gemischen aus zwei oder mehr davon mit Diarylcarbonaten, beispielsweise Diphenylcarbonat, oder Phosgen, erhalten werden. Ebenfalls geeignet sind Hydroxyester von Polylactonen. Eine weiter Gruppe von Polyolen können OHfunktionelle Poylurethanpolyole sein.

Ebenfalls als Polyolkomponente geeignet sind OH-Gruppen tragende Polyacrylate. Diese Polyacrylate sind beispielsweise erhältlich durch die Polymerisation von ethylenisch ungesättigten Monomeren, die eine OH-Gruppe tragen. Hierzu geeignete ethylenisch ungesättigte Carbonsäuren sind beispielsweise Acrylsäure, Methacrylsäure, Crotonsäure oder Maleinsäure oder deren Ester mit C₁ bis C₂-Alkoholen. Entsprechende OH-Gruppen tragende Ester sind beispielsweise 2-Hydroxyethylacrylat, 2-Hydroxyethylmethacrylat, 2-Hydroxypropylacrylat, 2-Hydroxypropylmethacrylat, 3-Hydroxypropylacrylat oder 3-Hydroxypropylmethacrylat oder Gemische aus zwei oder mehr davon.

Aus den oben erwähnten Polyolen und den Polyisocyanaten können auf bekannte Art und Weise PU-Prepolymere hergestellt werden. Dabei kann aus den Polyolen und den Isocyanaten ein NCO-Gruppen-haltiges Prepolymer hergestellt werden. Beispiele dafür sind in der EP-A951493, EP-A1341832, EP-A 150444, EP-A 1456265, WO 2005/097861 beschrieben. Die entsprechenden PU-Prepolymeren können mit ebenfalls an sich bekannten weiteren Hilfsstoffen zu Kaschierklebstoffen formuliert werden.

Gegebenenfalls können solche Klebstoffe auch organische Lösemittel enthalten, so weit diese nicht mit den vorhandenen Isocyanat-Gruppen reagieren.

Die so erhaltene PU-Prepolymere weisen mit OH-Gruppen oder Wasser reaktive Isocyanatgruppen auf. Sie haben eine molare Masse von 500 bis 20 000 g/mol (zahlenmittlere Molekulargewicht, bestimmbar durch Gelpermeationschromatographie, GPC). Die Viskosität der Prepolymere soll bei Applikationstemperatur des Klebstoffs in einem Temperaturbereich von 20 °C bis 100 °C im Bereich von 500 bis 25 000 mPas liegen (gemessen nach Brookfield ISO 2555, bei angegebener Temperatur).

Zusätzlich zu den oben erwähnten bekannten Bestandteilen muss ein erfindungsgemäßer PU-Klebstoff niedermolekulare oligomere Verbindungen enthalten, die mit primären Aminogruppen reaktive funktionelle Gruppen enthalten, ausgewählt aus Epoxid-Gruppen oder oligomeren Polystern von ungesättigten Carbonsäuren. Unter niedermolekular sollen ein Molekulargewicht von unterhalb 2000 g/mol verstanden werden. Es handelt sich um Verbindungen, die mindestens 2 bis zu 10 reaktive Gruppen enthalten, die mit Aminen, insbesondere primären Aminen, reagieren können. Beispiele für solche funktionelle Gruppen sind CarbonsäureAnhydridgruppen, Epoxidgruppen oder insbesondere (Meth)acrylgruppen. Insbesondere kann es sich bei den im vernetzten Klebstoff vorhandenen oder sich bildenden Aminogruppen um primäre aromatische Aminogruppen handeln. Diese Reaktion zum Abfangen der Aminogruppen kann ggf. durch Katalysatoren unterstützt werden.

Es ist bevorzugt, wenn die niedermolekularen Amino-reaktiven Verbindungen mehrere funktionelle Gruppen enthalten. Auf diese Weise kann das Molekulargewicht der entstehenden reagierten Produkte erhöht werden. Damit ist nicht nur die Menge der primären aromatischen Aminogruppen reduziert, weiterhin sind die entstehenden Umsetzungsprodukte hochmolekular, so dass diese selbst auch eine verringerte Migrationsfähigkeit aufweist.

Bei den niedermolekularen Amino-reaktiven Verbindungen (A) kann es sich beispielsweise um oligomere Polyester von ungesättigten Carbonsäuren handeln. Beispielsweise können Polyole mit 2 bis 10 OH-Gruppen mit (Meth)acrylsäure verestert werden. Andere geeignete Säuren sind beispielsweise Itaconsäure, Crotonsäure, Maleinsäure, Fumarsäure, Citraconsäure, Zimtsäure, Vinylsulfonsäure, Vinylphosphonsäure oder deren Derivate. Ebenso können die entsprechenden Amide eingesetzt werden, die durch Umsetzung von primären oder sekundären Polyaminverbindungen mit den oben genannten ungesättigten Carbonsäuren hergestellt werden können.

Eine weitere Gruppe der einsetzbaren niedermolekularen Amin-reaktiven Gruppen sind Oligomere, die Säureanydridgruppen enthalten. Beispielsweise kann es sich dabei um Anhydride von 2 bis 10 funktionellen ungesättigten Carbonsäuren handeln, wie Fettsäuren; aromatische Polycarbonsäuren, wie Phtalsäure, Isophtalsäure, Terphtalsäure; aliphatische Carbonsäuren wie Zitronensäure, Trimelitsäure. Es ist möglich, dass diese Polycarbonsäuren zusätzlich zu den notwendigen Säurenanhydridgruppen noch weitere Carbonsäureestergruppen enthalten. Es können auch gemischte Säureanhydride vorhanden sein.

Eine weitere Gruppe von niedermolekularen Amin-reaktiven Gruppen sind oligomere Epoxide. Dabei kann es sich um Glycidylester von Polycarbonsäuren handeln, es können die üblichen bekannten Polycarbonsäuren eingesetzt werden. Weiterhin ist es möglich niedermolekulare Polyacrylsäuren mit Glycidylalkoholen umzusetzen. Eine weitere Möglichkeit besteht darin, niedermolekulare ungesättigte Verbindungen an mindestens einer Doppelbindung zu epoxidieren. Beispiele für solche Verbindungen sind epoxidierte Polybutadiene.

Es ist erfindungswesentlich, dass diese niedermolekularen Amin-reaktiven Verbindungen ein Molekulargewicht unterhalb von 2000 g/mol aufweisen, insbesondere unterhalb von 1000 g/mol. Sind die Molekulargewichte zu hoch, ist die Beweglichkeit dieser Verbindungen in dem vernetzten Klebstoff gering, dadurch wird die Reaktionsfähigkeit mit den primären Aminogruppen herabgesetzt. Weiter ist es möglich, dass diese niedermolekularen Oligomeren noch zusätzlich OH-Gruppen enthalten. Diese OH-Gruppen sollen bevorzugt eine Reaktivität aufweisen, die geringer als die Reaktivität der Mehrzahl der OH-Gruppen der ggf. vorhandenen Polyol-Vernetzern ist. Auf diese Weise kann sichergestellt werden, dass soweit noch freie NCO-Gruppen vorhanden sind, diese nach dem Aufbau des vernetzten Klebstoffes mit den niedermolekularen Verbindungen reagieren können.

Die niedermolekularen Amino-reaktiven Gruppen tragenden Verbindungen sollen möglichst stabil in den PU-Klebstoff eingearbeitet sein. Das kann durch eine gute Verträglichkeit der Verbindungen mit dem PU-Prepolymer erzielt werden. In einer Ausführungsform der Erfindung ist es auch möglich, dass solche erfindungsgemäß geeigneten Verbindungen zusätzlich H-acide Gruppen enthalten, wie beispielsweise OH-Gruppen. Bei solchen OH-Gruppen, insbesondere primären oder sekundären OH-Gruppen ist es möglich, dass diese bei der Vernetzungsreaktion des PU-Prepolymeren mit den vorhandenen NCO-Gruppen reagieren. Damit wird eine Migrationsfähigkeit dieser Verbindungen reduziert, die solche Amino-reaktive Gruppen aufweisen.

Die Amino-reaktiven Verbindungen sollen in einer Menge von 0,5 bis 20 Gew.-% vorhanden sein, insbesondere soll die Menge zwischen 1 bis 15 Gew.-% bezogen auf den gesamten Klebstoff betragen. Erfindungsgemäß sollen die PU-Klebstoffe vor der Vernetzungsreaktion keine reaktiven Aminogruppen enthalten, so dass während der Lagerung der Klebstoffe keine vorzeitige Reaktion mit der zusätzlichen Amin-reaktiven Verbindung eintritt. Die Reaktion der primären Aminogruppe mit dem Oligomeren ist langsam gegenüber der Vernetzungsreaktion der Isocyanatgruppen. Erst nach der Reaktion der Isocyanatgruppen mit den H-aciden Gruppen zu Urethanen oder Harnstoffen können durch langsamere Reaktion die entstehenden primären insbesondere aromatischen Aminogruppen abreagieren. Gegebenenfalls ist es möglich, dass in den PU-Klebstoffen auch Katalysatoren enthalten sind, die die Reaktion zwischen primären aromatischen Aminogruppen und den Amino-reaktiven Gruppen fördern. Beispielsweise können alkalische Katalysatoren enthalten sein, die eine mit aktivierten Doppelverbindungen fördern. Weiterhin ist es möglich elektrophile Katalysatoren einzusetzen, die beispielsweise die Reaktion mit Epoxidgruppen erleichtern.

Weiterhin können dem erfindungsgemäßen Klebstoffs die üblichen Additive enthalten sein. Bei den weiteren Bestandteilen handelt es sich beispielsweise um Harze (Tackifier), Katalysatoren auf Basis von metallorganischen Verbindungen oder tertiären Aminen, wie Zinnverbindungen oder DABCO, Stabilisatoren, Vernetzungsmittel oder Viskositätsregler, Füllstoffe oder Pigmente Weichmacher oder Antioxidantien.

1K-PU-Klebstoffe enthalten im Allgemeinen ein oder mehrere NCO-reaktive PU-Prepolymere. Diese vernetzen üblicherweise unter Einwirkung von Wasser, als Bestandteil des zu verklebenden Substrates oder aus der Luft, zu Klebstoffen. 2K-PU-Klebstoffe enthalten eine Komponente, die die oben genannten PU-Prepolymeren oder die oben genannten Polyisocyanate enthält. Als zweite vernetzende Komponente sind H-acide Polymere einsetzbar, beispielsweise die oben erwähnten Polyole, Polyamide oder SH-Gruppen-haltige Polymere. Unmittelbar vor der Anwendung werden die beiden Komponenten gemischt und es entsteht ein abreagierender Klebstoff. Dieser muss vor dem Fortschreiten der Vernetzungsreaktion verarbeitet werden.

Die erfindungsgemäßen Polyurethanklebstoffe sind bei Applikationstemperaturen flüssig, entweder bei Raumtemperatur oder als Schmelzklebstoff. Sie werden mit üblichen Aggregaten auf die zu verklebenden Substrate, insbesondere Folien aufgetragen und dann auf bekannte Art und Weise miteinander verklebt. Dabei ist es zweckmäßig, ggf. erhöhte Temperaturen anzuwenden, um eine bessere Applikation und schnellere Vernetzungsreaktion zu erzielen.

Die erfindungsgemäßen Polyurethan-Klebstoffe sind insbesondere als Kaschierklebstoffe geeignet. Sie können in einem Verfahren eingesetzt werden, bei dem bekannte Folien auf Basis von Polymeren, wie PP, PE, OPA, Polyamid, PET, Polyester, Metallfolien miteinander verklebt werden. Dabei wird der erfindungsgemäße Klebstoff auf eine ggf. vorbehandelte oder bedruckte Folie aufgetragen. Das kann bei erhöhter Temperatur stattfinden, um eine dünne und gleichmäßige Beschichtung zu erzielen. Unter Druck wird dann eine zweite Folie aus gleichem oder anderen Material aufkaschiert. Es kann erwärmt werden, der Klebstoff vernetzt und es entsteht eine Mehrschichtfolie. Diese kann ggf. auch aus mehr als zwei Schichten bestehen.

Üblicherweise werden die Folien nach der Herstellung gelagert. Während dieser Zeit ist es möglich, dass sich die erfindungsgemäßen Klebstoffe weiter vernetzen. In dieser Zeit reagieren die entstehenden primären Aminogruppen, insbesondere primäre aromatischen Aminogruppen mit den zusätzlich vorhandenen Amin-reaktiven Verbindungen. Dadurch entstehen Umsetzungsprodukte, die keine aktive Aminfunktion aufweisen und die nicht mehr migrieren können.

Weiterhin ist es möglich, dass bei einer späteren Verarbeitung der Folien ein Schritt zur Erwärmung der verklebten Mehrfachfolien vorgesehen ist. Das kann beispielsweise auch in feuchte Atmosphäre geschehen, z.B. beim Sterilisieren. Auch bei diesen erhöhten Temperaturen ist es erfindungsgemäß möglich, dass die entstehenden primären aromatischen Amine, mit den funktionellen Gruppen der niedermolekularen Verbindung reagieren, die sich noch in der vernetzten Kaschierklebstoffschicht befinden.

Durch die Verwendung der erfindungsgemäßen flüssigen oder Schmelzklebstoffe als Kaschierkleber ist es möglich, kaschierte zwei- oder Mehrschicht- Folien zu erhalten, die den hohen Anforderungen an eine Eignung für Lebensmittel oder medizinische Verpackungen genügen. Insbesondere ist der Gehalt an primären aromatischen Aminen, die bei den entsprechenden Testverfahren aus der Folie extrahiert werden, deutlich zu vermindern. Insbesondere ist es möglich, Folien zu erhalten, die einen Gehalt von kleiner 10 µg/ 1 I Extraktionslösung primäre aromatische Amine aufweisen, gemessen nach EEC2002/72. Dabei ist der Effekt unmittelbar nach der Vernetzung des Klebstoffs zu beobachten, er ist jedoch auch nach einer späteren Sterilisation festzustellen.

Durch die erfindungsgemäßen Polyurethan-Klebstoffe, die aromatische Polyisocyanate enthalten können und/oder PU-Prepolymere auf Basis von aromatischen Isocyanaten, ist es möglich Klebstoffe herzustellen, die eine hervorragende Eignung als Kaschierklebstoff haben. Auftragsverhalten, Vernetzung und Haftung der Folien miteinander sind sehr gut. Es entstehen aber bei einer Verklebung mit den erfindungsgemäßen Klebstoffe nur sehr geringe Mengen an migrationsfähigen primären aromatischen Aminen in der Klebstoffschicht und diese werden in der Folie fest gebunden. Diese Eigenschaft bleibt bei einer erfindungsgemäßen Mehrschichtfolie auch dann erhalten, wenn diese im Laufe ihres Herstellungsverfahrens auch einer Sterilisation oder anderweitigen Erwärmung auf höhere Temperatur unterzogen wird.

Die nachfolgenden Beispiele erläutern die Erfindung. Vergleichsbeispiel 1

| | |
|---|---|
| Polyesterpolyol 1 (OH-Zahl 60) | 16,5 % |

Umsetzungsprodukt aus einem Gemisch von aromatischen und aliphatischen Dicarbonsäuren mit Polyetherdiolen (Mol-Gewicht < 200 g/mol)

| | |
|---|---|
| Polyesterpolyol 2 (OH-Zahl 60) | 30,5 % |

Umsetzungsprodukt aus einem Gemisch von aromatischen und aliphatischen Dicarbonsäuren mit niedermolekularen aliphatischen Diolen (weniger als 20 C-Atome)

| | |
|---|---|
| MDI | 13 % |
| Ethylacetat | 40 % |

### Kennzahl

Festkörper ca. 67 %
Viskosität 150 bis 500 mPas (20°C)
NCO-Wert 2,2 %

### Beispiel 2

| | |
|---|---|
| Polyesterpolyol 1 (OH-Zahl 60) | 13,2 % |
| Polyesterpolyol 2 (OH-Zahl 60) | 24,4 % |
| MDI | 10,4 % |
| Ethylacetat | 32 % |
| polymeres Acrylat- Additiv | 20 % |

Umsetzungsprodukt aus Trimethylolpropan und Methacrylsäure (ca. 390 g/mol)

### Kennzahlen

Festkörpergehalt 69 %
Viskosität 150 bis 500 mPas (20°C)
NCO-Wert 1,8 %

### Beispiel 3

| | |
|---|---|
| Polyesterpolyol 1, | 14,85 % |
| Polyesterpolyol 2, | 27,45 % |
| MDI | 11,7 % |
| Ethylacetat | 36 % |
| Epoxidiertes Polymeradditiv | 10 % |

Epoxidiertes Polybutadien, ca. 1400 g/mol

### Kennzahlen

Festkörpergehalt 63 %
Viskosität 300 bis 1000 mPas (20°C)
NCO-Wert 2,0 %

### Herstellungsverfahren

Die Polyesterpolyole werden in Ethylacetat vorgelegt und gemischt. Dann wird MDI zugegeben und die Reaktionstemperatur auf 70°C gebracht. Nach Erreichen des NCO-Wertes lässt man die Lösung abkühlen. Die Additive werden dann bei einer Temperatur < 50 °C zugegeben und homogenisiert werden.

Zu den Prepolymerlösungen der Beispiele 1 bis 3 wird im Verhältnis 20:1 ein Polyol (OH-Zahl ca. 350) gemischt (leichter NCO-Überschuss). Der entstehende Klebstoff wird auf eine PET/AL-Verbundfolie in einer Schichtdicke von ca. 5 µm aufgetragen. Diese Folie wird gegen eine handelsübliche CPP-Folie kaschiert.
Die Verbundfolien härten 7 Tage durch.

Aus diesen Verbundfolien werden Beutel von 500 cm² durch thermisches Versiegeln der Kanten hergestellt. Die Beutel werden mit Wasser gefüllt, versiegelt und anschließend sterilisiert (121°C, 30 Minuten). Die Migration primärer aromatischer Amine (paA) wird gemäß EEC 2000/72 bestimmt. Es werden Folienteile nach dem Kaschieren, nach dem Aushärten, sowie nach dem Sterilisiervorgang bestimmt.

Die Konzentrationswerte im Vergleichsversuch 1 werden mit 100 angesetzt. Es zeigt sich, dass die Messwerte bei den Versuchen 2 und 3 nach einem Tag Härtung 50 % der Vergleichswerte betragen, nach 7 Tage Härtung nach der Sterilisation ca. 30 bis 40 % der Vergleichswerte.

## Patentansprüche

1. Polyurethanklebstoff zum Kaschieren von Folien, wobei der Klebstoff mindestens ein NCO-reaktives Polyurethanprepolymer und/oder Polyisocyanate enthält, **dadurch gekennzeichnet, dass** der PU-Klebstoff bei Raumtemperatur flüssig ist und zwischen 0,5 bis 20 Gew.% einer niedermolekularen Verbindung (A) mit einem Molekulargewicht unterhalb von 2000 g/mol enthält, die mindestens eine mit primären Aminogruppen reaktive Gruppe enthält, ausgewählt aus Epoxid-Gruppen oder oligomeren Polyestern von ungesättigten Carbonsäuren.

2. Polyurethanklebstoff nach Anspruch 1 **dadurch gekennzeichnet, dass** die niedermolekulare Verbindung (A) ein Molekulargewicht unterhalb 1000 g/mol aufweist und 2 bis 10 reaktive Gruppen aufweist.

3. Polyurethanklebstoff nach einem der Ansprüche 1 oder 2, **dadurch gekennzeichnet, dass** die niedermolekulare Verbindung (A) zusätzlich OH-Gruppen enthält.

4. Polyurethanklebstoff nach einem der Ansprüche 1 bis 3, **dadurch gekennzeichnet, dass** der PU-Klebstoff aromatische Polyisocyanate enthält und/oder mindestens ein PU-Prepolymer auf Basis von aromatischen Polyisocyanaten.

5. Polyurethanklebstoff nach einem der Ansprüche 1 bis 4, **dadurch gekennzeichnet, dass** der PU-Klebstoff ein mit Polyolen vernetzender 2K-PU-Klebstoff ist.

6. Polyurethanklebstoff nach einem der Ansprüche 1 bis 4, **dadurch gekennzeichnet, dass** der PU-Klebstoff ein mit Feuchtigkeit vernetzender 1K-PU-Klebstoff ist.

7. Polyurethanklebstoff nach einem der Ansprüche 1 bis 6, **dadurch gekennzeichnet, dass** die niedermolekulare Verbindung (A) mehrere (Meth)acrylatgruppen aufweist und der Klebstoff zusätzlich mindestens einen Katalysator für eine Additionsreaktion Amin-Doppelbindungen enthält.

8. Polyurethanklebstoff nach einem der Ansprüche 1 bis 6, **dadurch gekennzeichnet, dass** die niedermolekulare Verbindung (A) mehrere Epoxidgruppen aufweist.

9. Polyurethanklebstoff nach einem der Ansprüche 1 bis 8, **dadurch gekennzeichnet, dass** 1 bis 15 Gew.% der niedermolekularen Verbindung (A) enthalten sind.

10. Verfahren zum Herstellen von kaschierten Mehrschichtfolien, die geringe Mengen an migrationsfähigen primären aromatischen Aminen enthalten oder bilden, wobei eine oder mehrere Folien mit Polyurethanklebstoffen nach Anspruch 1 bis 9 verklebt werden.

11. Verfahren nach Anspruch 10, **dadurch gekennzeichnet, dass** die Folien bei erhöhter Temperatur zwischen 30 bis 60°C verklebt werden.

12. Verfahren nach Anspruch 10 oder 11, **dadurch gekennzeichnet, dass** die verklebten Folien nach der Aushärtung einer Sterilisation unterworfen werden.

13. Mehrschichtfolie mit geringem Gehalt an migrationsfähigen primären aromatischen Aminen, wobei die einzelnen Folienschichten mit einem Polyurethanklebstoff nach Anspruch 1 bis 9 verklebt sind.

14. Verwendung von NCO-reaktiven Polyurethan-Klebstoffen nach Anspruch 1 bis 9 zum Verkleben von Folien.

## Claims

1. A polyurethane adhesive for laminating films, the adhesive containing at least one NCO-reactive polyurethane prepolymer and/or polyisocyanates, **characterized in that** the PU adhesive is liquid at room temperature and contains between 0.5 and 20 wt.% of a low-molecular compound (A) having a molecular weight below 2,000 g/mol and containing at least one group that is reactive with primary amino groups and is selected from epoxy groups or oligomeric polyesters of unsaturated carboxylic acids.

2. The polyurethane adhesive according to claim 1, **characterized in that** the low-molecular compound (A) has a molecular weight below 1,000 g/mol and comprises from 2 to 10 reactive groups.

3. The polyurethane adhesive according to one of claims 1 or 2, **characterized in that** the low-molecular compound (A) additionally contains OH groups.

4. The polyurethane adhesive according to one of claims 1 to 3, **characterized in that** the PU adhesive contains aromatic polyisocyanates and/or at least one PU prepolymer based on aromatic polyisocyanates.

5. The polyurethane adhesive according to one of claims 1 to 4, **characterized in that** the PU adhesive is a 2K PU adhesive which crosslinks with polyols.

6. The polyurethane adhesive according to one of claims 1 to 4, **characterized in that** the PU adhesive is a 1K PU adhesive which crosslinks with moisture.

7. The polyurethane adhesive according to one of claims 1 to 6, **characterized in that** the low-molecular compound (A) has a plurality of (meth)acrylate groups and the adhesive additionally contains at least one catalyst for an amine-double bond addition reaction.

8. The polyurethane adhesive according to one of claims 1 to 6, **characterized in that** the low-molecular compound (A) has a plurality of epoxy groups.

9. The polyurethane adhesive according to one of claims 1 to 8, **characterized in that** from 1 to 15 wt.% of the low-molecular compound (A) is contained.

10. A method for producing laminated multilayer films which contain or form low amounts of migratable primary aromatic amines, wherein one or more films are bonded using polyurethane adhesives according to claim 1 to 9.

11. The method according to claim 10, **characterized in that** the films are bonded at an elevated temperature of between 30 °C and 60 °C.

12. The method according to claim 10 or 11, **characterized in that**, after curing, the bonded films are subjected to sterilization.

13. A multilayer film having a low content of migratable primary aromatic amines, wherein the individual film layers are bonded using a polyurethane adhesive according to claim 1 to 9.

14. The use of NCO-reactive polyurethane adhesives according to claim 1 to 9 for bonding films.

## Revendications

1. Adhésif en polyuréthane servant au pelliculage de films, l'adhésif contenant au moins un prépolymère de polyuréthane réagissant avec l'isocyanate et/ou des polyisocyanates, **caractérisé en ce que** l'adhésif en PU est liquide à température ambiante et contient entre 0,5 et 20 % en poids d'un composé à bas poids moléculaire (A) ayant une masse moléculaire inférieure à 2 000 g/mol, qui contient au moins un groupe réagissant avec des groupes amine primaires, sélectionné parmi des groupes époxyde ou des polyesters oligomères d'acides carboxyliques insaturés.

2. Adhésif en polyuréthane selon la revendication 1, **caractérisé en ce que** le composé à bas poids moléculaire (A) a une masse moléculaire inférieure à 1 000 g/mol et comporte 2 à 10 groupes réactifs.

3. Adhésif en polyuréthane selon l'une des revendications 1 ou 2, **caractérisé en ce que** le composé à bas poids moléculaire (A) contient en outre des groupes OH.

4. Adhésif en polyuréthane selon l'une des revendications 1 à 3, **caractérisé en ce que** l'adhésif en PU contient des polyisocyanates aromatiques et/ou au moins un prépolymère de PU à base de polyisocyanates aromatiques.

5. Adhésif en polyuréthane selon l'une des revendications 1 à 4, **caractérisé en ce que** l'adhésif en PU est un adhésif 2K-PU réticulé avec des polyols.

6. Adhésif en polyuréthane selon l'une des revendications 1 à 4, **caractérisé en ce que** l'adhésif en PU est un adhésif 1K-PU réticulé avec de l'humidité.

7. Adhésif en polyuréthane selon l'une des revendications 1 à 6, **caractérisé en ce que** le composé à bas poids moléculaire (A) comporte plusieurs groupes (méth)acrylate et l'adhésif contient de plus au moins un catalyseur pour une réaction d'addition de liaisons doubles d'amine.

8. Adhésif en polyuréthane selon l'une des revendications 1 à 6, **caractérisé en ce que** le composé à bas poids moléculaire (A) comporte plusieurs groupes époxyde.

9. Adhésif en polyuréthane selon l'une des revendications 1 à 8, **caractérisé en ce qu'**il contient 1 à 15 % en poids du composé à bas poids moléculaire (A).

10. Procédé de fabrication de films multicouches pelliculés, qui contiennent ou forment de faibles quantités d'amines aromatiques primaires susceptibles de migrer, un ou plusieurs films étant collés au moyen d'adhésifs en polyuréthane selon les revendications 1 à 9.

11. Procédé selon la revendication 10, **caractérisé en ce que** les films sont collés à une température élevée entre 30 et 60 °C.

12. Procédé selon la revendication 10 ou 11, **caractérisé en ce que** les films collés sont soumis à une stérilisation après le durcissement.

13. Film multicouches ayant une faible teneur en amines aromatiques primaires susceptibles de migrer, les couches de film individuelles étant collées à l'aide d'un adhésif en polyuréthane selon les revendications 1 à 9.

14. Utilisation d'adhésifs en polyuréthane réagissant avec l'isocyanate selon les revendications 1 à 9 pour coller des films.
